# EUROPÄISCHE PATENTSCHRIFT

(11) **EP 2 748 908 B1**
(45) Veröffentlichungstag und Bekanntmachung des Hinweises auf die Patenterteilung: **20.05.2015**
(21) Anmeldenummer: 12746356.0
(22) Anmeldetag: 14.08.2012
(51) Int. Cl.: H02J 3/38, H02J 3/40

(54) **VERFAHREN ZUM BETREIBEN EINER WINDENERGIEANLAGE**
METHOD FOR OPERATING A WIND ENERGY INSTALLATION
PROCÉDÉ PERMETTANT DE FAIRE FONCTIONNER UNE INSTALLATION D'ÉOLIENNES

(30) Priorität: 23.08.2011 DE 102011081446
(43) Veröffentlichungstag der Anmeldung: 02.07.2014
(73) Patentinhaber: Wobben Properties GmbH, 26605 Aurich (DE)
(72) Erfinder: GIERTZ, Helge, 26789 Leer (DE)
(74) Vertreter: Eisenführ Speiser
(86) Internationale Anmeldenummer: PCT/EP2012/065911
(87) Internationale Veröffentlichungsnummer: WO 2013/026748

(56) Entgegenhaltungen:
- WO-A1-2009/068034

## Beschreibung

Die vorliegende Erfindung betrifft ein Verfahren zum Einspeisen elektrischer Leistung in ein elektrisches Netz, insbesondere unter Verwendung einer oder mehrerer Windenergieanlagen. Weiterhin betrifft die vorliegende Erfindung eine Windenergieanlage sowie einen Windpark und auch eine Windparkanordnung mit mehreren Windparks.

Verfahren zum Einspeisen elektrischer Leistung, insbesondere mittels Windenergieanlagen in ein elektrisches Netz sind allgemein bekannt. Zusätzlich zur reinen Einspeisung der verfügbaren Energie - bzw. Leistung wenn eine Momentanaufnahme betrachtet wird - können und müssen oftmals solche Verfahren zum Einspeisen auch Aufgaben einer Netzstabilisierung wahrnehmen. Vereinfacht ausgedrückt kann vorgesehen sein, abhängig von der Spannung im einzuspeisenden Netz, nachfolgend vereinfacht Netz genannt, mehr oder weniger Leistung einzuspeisen und/oder mehr oder weniger Blindleistung einzuspeisen, um nur einige Beispiele zu nennen. Die Netzspannung, also die Amplitude der elektrischen Spannung im Netz, insbesondere ein Effektivwert dieser Spannung, kann eine wichtige Größe sein, um abhängig davon die Maßnahmen zur Netzstabilisierung vorzunehmen.

Beispielsweise ist aus der internationalen Anmeldung WO 02/086315 A1 eine netzspannungsabhängige Phasenwinkelregelung bekannt und damit eine spannungsabhängige Einspeisung von Blindleistung. Aus der deutschen Patentanmeldung gemäß der Offenlegungsschrift DE 19 756 777 A1 ist eine netzspannungsabhängige Leistungsregelung bekannt, die die eingespeiste Leistung abhängig von der Netzspannung ändert.

Aufgrund der weiten Verbreitung dezentraler Einspeisevorrichtungen wie Windenergieanlagen oder Windparks mit einer Vielzahl von Windenergieanlagen tritt das Problem auf, dass mehrere Anlagen nach derselben Vorschrift eine Netzstützung unabhängig voneinander vornehmen wollen. Dies kann zu dem Effekt führen, dass eine Anlage den erzielten Effekt der Stützung durch eine andere Anlage auszugleichen versucht. Das Problem tritt insbesondere dann auf, wenn Größen im Netz, insbesondere die Netzspannung leichten Schwankungen unterliegen, also insbesondere in ihrer Amplitude etwas schwanken und zufällig eine der exemplarisch genannten Anlagen eher einen niedrigeren Wert der Spannungsschwankungen erfasst und eine andere Anlage eher einen höheren Wert der Schwankungen erfasst. In diesem Fall neigt die Anlage, die einen tendenziell niedrigeren Wert erfasst, dazu, Maßnahmen zur Spannungserhöhung einzuleiten, wohingegen die Anlage, die tendenziell einen höheren Wert erfasst, dazu neigt, Maßnahmen zur Spannungssenkung einzuleiten. Hierdurch können die Anlagen gegeneinander arbeiten.

Zumindest kann die Situation auftreten, dass etwaige Netzstützungen nur durch eine Anlage ausgeführt werden und die andere Anlage keinen oder wenig Beitrag leistet.

Bei der Verwendung eines Windparks kann dieses Problem dadurch gelöst werden, dass die Windenergieanlagen zentral gesteuert werden, indem sie einen beispielsweise prozentualen Einstellwert erhalten, der von einer zentralen Steuereinheit vorgegeben wird, die entsprechend auch nur eine Spannungsmessung im Netz betreibt. Jedenfalls die Anlagen eines solchen Windparks können dadurch nicht mehr gegeneinander arbeiten. Eine zentrale Parkregelung ist beispielsweise in der europäischen Patentanmeldung EP 2 113 980 A2 gezeigt.

Das oben erläuterte Problem, dass einspeisende Anlagen gegeneinander arbeiten können, oder dass zumindest eine unerwünschte Ungleichverteilung der Netzstützung auftritt, kann auch für mehrere unabhängig voneinander in ein Netz einspeisende Windparks sinngemäß auftreten. Bei mehreren unterschiedlichen Windparks kommt oftmals das Problem hinzu, dass Windenergieanlagen unterschiedlicher Hersteller jeweils zusammengefasst sind. Dies erschwert zumindest eine Koordination und gemeinsame Vorgabe von Zielwerten, wie dies für mehrere Windenergieanlagen innerhalb eines Parks oben erläutert wurde.

Als allgemeiner Stand der Technik sei auf die Dokumente US 2004/0010350 A1, WO 2011/073670 A2 und WO 2009/068034 A1 verwiesen.

Der vorliegenden Erfindung liegt somit die Aufgabe zugrunde, zumindest eines der oben genannten Probleme zu adressieren. Insbesondere soll eine Lösung vorgeschlagen werden, die es ermöglicht, dass mehrere grundsätzlich unabhängig voneinander betriebene in dasselbe Netz einspeisende Einspeiseeinheiten jeweils gleichmäßig ins Netz einspeisen, insbesondere gleichmäßig - zumindest bezogen auf ihre Größe oder Einspeisekapazität - Maßnahmen einer Netzstützung durchführen können. Zumindest soll eine alternative Lösung vorgeschlagen werden.

Erfindungsgemäß wird ein Verfahren nach Anspruch 1 vorgeschlagen. Demnach wird elektrische Leistung in ein elektrisches Netz mittels wenigstens einer Windenergieanlage mit einer Einspeiseanordnung an einem Einspeisepunkt eingespeist. Es kann eine Windenergieanlage, mehrere Windenergieanlagen und/oder oder ein Windpark vorgesehen sein, wobei die Einspeisung die Verwendung eines Transformators beinhalten kann.

Die Einspeisung erfolgt abhängig von elektrischen Größen im Netz. Messwerte der elektrischen Größen bzw. Messwerte zum Bestimmen der elektrischen Größen, wenn die Messung indirekt erfolgt, werden zu Messzeitpunkten in vorbestimmten Zeitabständen erfasst. Die Messzeitpunkte werden auf ein externes, außerhalb der ersten Einspeiseanordnung verfügbares Zeitsignal synchronisiert.

Die vorbestimmten Zeitabstände können beispielsweise im Sekundenrhythmus oder Minutenrhythmus erfolgen. Dies schließt nicht aus, dass aufgrund gegebener Umstände auch Zeitpunkte ausgelassen werden.

Die elektrischen Größen werden also regelmäßig bestimmt und über das externe Zeitsignal erfolgt eine Synchronisierung, die es ermöglicht, absolute Zeitpunkte vorzugeben.

Beispielsweise kann eine Messwertaufnahme immer zur vollen Minute erfolgen. Diese Zeitangabe der vollen Minute ist aber durch die externe Synchronisierung eine Zeitangabe, die auch außerhalb der Einspeiseanordnung definiert ist und somit auch in anderen Einspeiseanordnungen, die keinerlei Verknüpfung mit dieser vorliegenden Einspeiseanordnung haben müssen, verwendet wird. Die externe Synchronisierung ermöglicht somit, dass unabhängig voneinander arbeitende Einspeiseanordnungen tatsächlich regelmäßig zum gleichen Messzeitpunkt Größen im Netz wie insbesondere die Netzspannung, erfassen. Unterliegt die Netzspannung Schwankungen, so kann durch diese Synchronisierung erreicht werden, dass unabhängig voneinander arbeitende und damit unabhängig voneinander messende Einspeiseanordnungen dieselbe Netzsituation messen. Wird also aufgrund des gewählten Messzeitpunktes zufällig bei schwankender Spannung ein hoher Wert dieser schwankenden Spannung gemessen, so messen alle diese Einspeiseanordnungen diesen hohen Wert. Umgekehrt gilt das Gleiche, wenn ein niedriger Spannungswert einer solchen schwankenden Spannung erfasst wird. Die Einspeiseanordnungen benötigen hierzu keine Kommunikation untereinander. Es braucht nur ein externes Synchronisationssignal für jede dieser genannten Einspeiseanordnungen verfügbar sein.

Ein solches Zeitsignal oder Synchronisationssignal kann beispielsweise ein Zeitsignal eines satellitengestützten Positionierungssystems sein, wie beispielsweise ein GPS, oder andere wie beispielsweise Glonass oder Galileo.

Obwohl insbesondere GPS landläufig nur zur Positionsbestimmung Berühmtheit erlangt hat, beinhaltet es doch auch ein Zeitsignal. Die offizielle Bezeichnung von GPS lautet: "Navigational Satellite Timing and Ranging - Global Positioning System". Ein solches GPS liefert somit ein global verfügbares Zeitsignal. Es ist somit absolut eine volle Minute - um bei diesem Beispiel zu bleiben - weltweit einheitlich verfügbar, unabhängig davon, ob diese beispielsweise mit einer vollen Minute einer Atomuhr übereinstimmen sollte. Entscheidend ist, dass alle Einspeiseanordnungen, die mit dem erfindungsgemäßen Verfahren betrieben werden sollen, den gleichen Messzeitpunkt definieren. Dies ist durch die Verwendung eines solchen externen, außerhalb der Einspeiseanordnung verfügbaren Zeitsignals wie das eines GPS möglich.

Vorzugsweise ist die Einspeiseanordnung als Windenergieanlage oder als Windpark mit mehreren Windenergieanlagen ausgebildet. So wird insbesondere für unabhängig voneinander in das Netz einspeisende Windenergieanlagen oder unabhängig voneinander einspeisende Windparks eine entsprechende Abstimmung auf einfache und effiziente Weise geschaffen. Hierdurch wird eine gleichmäßige Vornahme von Maßnahmen der Netzstützung ermöglicht, ohne dass diese unabhängig einspeisenden Windenergieanlagen oder unabhängig einspeisenden Windparks eine Kommunikation untereinander benötigen.

Vorzugsweise werden die Messwerte über eine vorbestimmte Periodendauer aufgenommen, insbesondere gemittelt. So kann beispielsweise jede Minute eine Mittelung über 1 Sekunde oder 5 Sekunden - um nur zwei Beispiele zu nennen - aufgenommen und ausgewertet werden. Durch die Festlegung absoluter Messzeitpunkte, die hierbei beispielsweise als Zeitpunkte des Beginns der Periodendauer festgelegt werden können, erfolgt die Messaufnahme und insbesondere die Mittelwertbildung in unabhängig voneinander arbeitenden Einspeiseanordnungen über denselben Zeitbereich und somit ergeben sich im Wesentlichen dieselben Messwerte bzw. Mittelungswerte.

Vorzugsweise werden mehrere Einspeiseanordnungen betrieben und jede Einspeiseanordnung wird zum Einspeisen an jeweils einem eigenen Einspeisepunkt betrieben. Jede dieser Einspeiseanordnungen verwendet zum Synchronisieren der jeweiligen Messzeitpunkte dasselbe Zeitsignal. Somit werden die Messzeitpunkte aller dieser Einspeiseanordnungen synchronisiert und entsprechend messen alle diese Einspeiseanordnungen jeweils zum gleichen, also nach absolutem Maßstab gleichen Zeitpunkt. Auch hier werden zwar etwaige Spannungsschwankungen nicht identifiziert und insoweit könnte ein geringer Messfehler vorliegen, aber ein solcher Messfehler wäre bei allen diesen betriebenen Einspeiseanordnungen gleich, jedenfalls soweit er sich auf zeitliche Schwankungen im Netz bezieht bzw. durch diese verursacht wird.

Gemäß einer weiteren Ausführungsform wird vorgeschlagen, dass wenigstens eine Einspeiseanordnung, insbesondere alle involvierten Einspeiseanordnungen, jeweils eine Uhr, insbesondere eine hochgenaue Uhr aufweisen. Dabei werden die Messzeitpunkte mittels der Uhr berechnet und die Uhr wird regelmäßig mittels des externen Zeitsignals synchronisiert. Hierdurch soll eine Zeitgleichheit der Messzeitpunkte dieser Einspeiseanordnung zu anderen Einspeiseanordnungen ermöglicht werden bzw. eine Zeitgleichheit der Messpunkte aller dieses Verfahren anwendenden Einspeiseanordnungen erreicht werden. Durch die Verwendung einer Uhr, also einer internen Uhr, wird erreicht, dass das Verfahren zum Einspeisen nicht von einer durchgehenden Verfügbarkeit des externen Zeitsignals abhängt. Vielmehr kann das Verfahren basierend auf der internen Uhr betrieben werden und ein Zeitabgleich mit dem externen Synchronisationssignal braucht nur gelegentlich durchgeführt zu werden. Wie oft eine solche Synchronisation durchgeführt werden muss, hängt insbesondere von der Gleichlaufqualität der internen Uhr ab.

Vorzugsweise wird als elektrische Größe bzw. als elektrische Größen die Netzspannung erfasst. Günstig ist es zudem, dass abhängig von den erfassten elektrischen Größen, insbesondere abhängig der erfassten Netzspannung, Maßnahmen zum Stützen des Netzes vorgenommen werden, insbesondere dass Blindleistung und zusätzlich oder alternativ Wirkleistung abhängig von der erfassten Netzspannung eingespeist wird. Hierdurch kann eine Netzstützung durch diese Blind- und/oder Wirkleistungseinspeisung von mehreren Einspeiseanordnungen, insbesondere mehreren Windenergieanlagen und insbesondere von mehreren Windparks auf gleichmäßige Art und Weise vorgenommen werden. Eine ungleiche Überbeanspruchung durch eine solche Netzstützung einer der Einspeiseanordnungen wird dadurch vermieden.

Vorzugsweise kann eine Erfassung eines externen Zeitsignals zum Synchronisieren und/oder die Durchführung der Synchronisierung mittels eines Scada-Systems durchgeführt werden. Dieses im Grunde bekannte System kann auch eine interne Uhr, beispielsweise für eine Parkregelung, beinhalten. Das Scada-System kann auch je nach Ausführungsform als zentrale Steuerung für einen Windpark oder für Teilfunktionen im Windpark vorgesehen sein.

Weiterhin wird eine Windenergieanlage vorgeschlagen mit einem aerodynamischen Rotor zum Erzeugen einer Drehbewegung aus Wind, mit einem elektrischen Generator zum Erzeugen elektrischer Leistung aus der Drehbewegung und mit einem Einspeisemittel, insbesondere einem Wechselrichter, zum Einspeisen der elektrischen Leistung oder eines Teils davon in ein elektrisches Netz. Demnach wird vorgeschlagen, eine zum Einspeisen in ein Netz vorbereitete Windenergieanlage mit einem Verfahren gemäß wenigstens einer der beschriebenen Ausführungsformen auszustatten. Insbesondere weist eine solche Windenergieanlage entsprechende in den jeweiligen Ausführungsformen vorausgesetzte oder genannte technische Mittel auf. Insbesondere weist eine solche Windenergieanlage ein Steuerungsmittel mit einer Prozesssteuerung auf, die eines der genannten Verfahren implementiert hat. Vorzugsweise weist die Windenergieanlage, insbesondere ihre Steuerungsvorrichtung, eine interne Uhr auf, die mittels des externen verfügbaren Signals synchronisiert werden kann.

Weiterhin wird ein Windpark mit mehreren Windenergieanlagen vorgeschlagen, der mit einem Verfahren gemäß wenigstens einer der genannten Ausführungsformen gesteuert wird, insbesondere indem ein solches Verfahren implementiert ist. Ein solcher Windpark kann eine entsprechende mit einem solchen Verfahren ausgestattete Windenergieanlage aufweisen oder der Windpark kann eine zentrale Steuereinheit zum Implementieren eines der erfindungsgemäßen Verfahren umfassen. Eine Synchronisierung und entsprechend durchgeführte Messung zu absoluten Zeitpunkten kann für den Windpark zentral vorgesehen sein. Insoweit kann die Messung mehrerer Windparks aufeinander abgestimmt werden, indem synchronisierte Messzeitpunkte verwendet werden, ohne dass eine Kommunikation der Windparks untereinander erforderlich ist.

Entsprechend wird auch eine Windparkanordnung mit mehreren Windparks vorgeschlagen, wobei jeder Windpark mit einem erfindungsgemäßen Verfahren gesteuert wird.

Nachfolgend wird die Erfindung anhand von Ausführungsformen unter Bezugnahme auf die begleitenden Figuren exemplarisch erläutert.
Fig. 1 zeigt eine Windenergieanlage, die ein erfindungsgemäßes Verfahren verwendet.
Fig. 2 zeigt schematisch das erfindungsgemäße Konzept zum Synchronisieren zweier Windparks.
Fig. 3 zeigt schematisch einen an ein Netz angeschlossenen Windpark mit einer Synchronisierung unter Zuhilfenahme eines SCADA-Systems.
Fig. 4 veranschaulicht die zugrunde liegenden Probleme einer Spannungsmessung bei schwankender Spannung.
Fig. 5 zeigt ein Diagramm zum Veranschaulichen einer spannungsabhängigen Blindleistungseinspeisung, als ein Netzstützungsbeispiel.

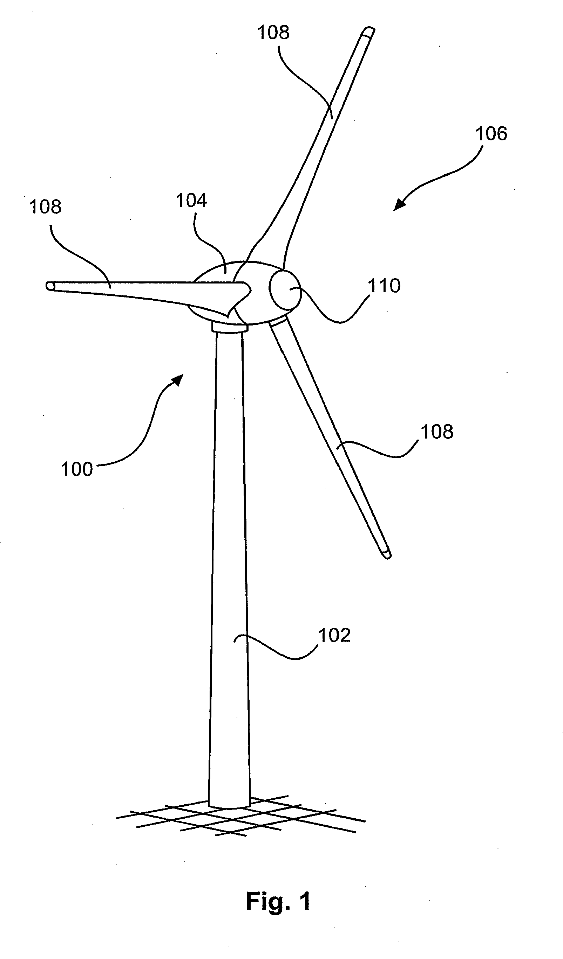

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

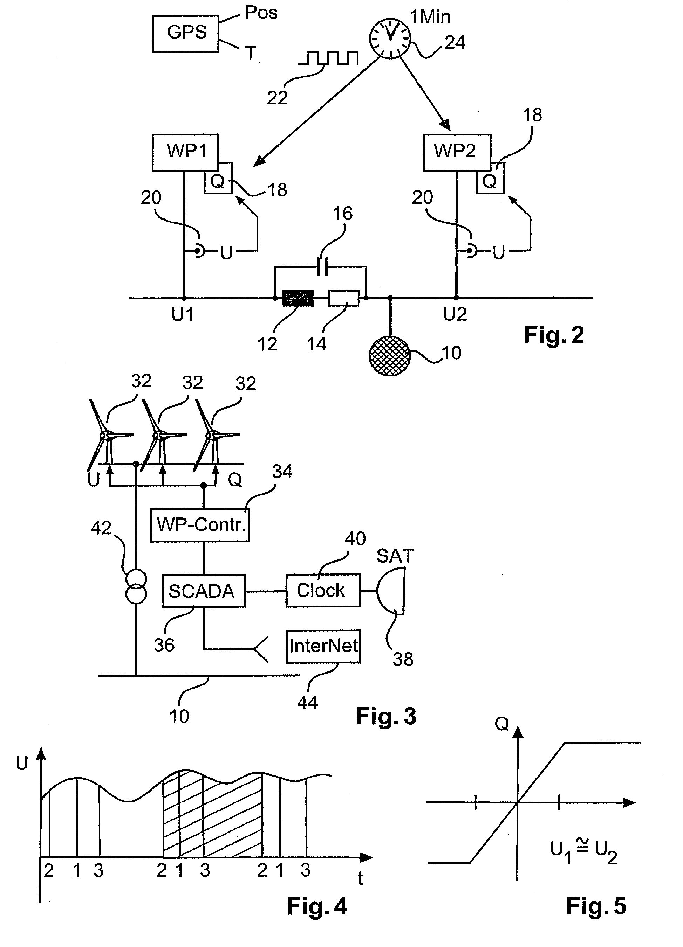

Fig. 2 zeigt schematisch ein Netz 10, dessen Leitungseigenschaften veranschaulicht angedeutet sind durch eine Leitungsinduktivität 12, einen Leitungswiderstand 14 und eine Leitungskapazität 16. Bei realistischer Betrachtung ergeben sich dadurch auf beiden Seiten dieser Leitungsinduktivität 12, Leitungswiderstand 14 und Leitungskapazität 16 unterschiedliche Spannungen im Netz, die als U1 und U2 angezeigt sind.

An den entsprechenden Stellen speist veranschaulichend ein erster Windpark WP1 und ein zweiter Windpark WP2 ein. Jeder dieser beiden Windparks WP1 und WP2 ist in der Lage, Blindleistung in das Netz 10 einzuspeisen, was durch einen Blindleistungssteller 18 angedeutet ist, der auch als Q-Steller bezeichnet werden kann.

Entsprechend weisen beide Windparks WP1 und WP2 einen Spannungsaufnehmer 20 auf, der den gemessenen Spannungswert U entsprechend an den Blindleistungssteller 18 gibt, damit dieser spannungsabhängig Blindleistung ins Netz 10 einspeisen kann.

Eine mögliche Art und Weise der Blindleistungseinspeisung ist in Fig. 5 verdeutlicht. Dort ist die Blindleistung Q in Abhängigkeit der Spannung U₁ bzw. U₂ abgetragen. Dort wird vereinfachend von einem linearen Zusammenhang zwischen der Blindleistung Q und der Spannung U₁ bzw. U₂ ausgegangen, die ab einem bestimmten Wert der Spannung einen Grenzwert annimmt. In erster Näherung wird hier davon ausgegangen, dass die Spannungen U₁ und U₂, die sich auf die Darstellung der Fig. 2 beziehen können, etwa gleich groß sind. Es ist zu beachten, dass es hier auf die Spannungshöhe im Sinne des Effektivwerts der Spannung ankommt. Es können auch andere Größen zugrunde gelegt werden, was jedoch weniger üblich ist.

In Fig. 2 ist veranschaulichend dargestellt, dass die beiden Windparks WP1 und WP2 über ein globales Zeitsignal 22 synchronisiert werden. Dieses externe Zeitsignal 22 wird hier durch ein GPS erzeugt, das neben einer Position, die dort als Pos angedeutet ist, auch ein Zeitsignal erzeugt, das dort als T angedeutet ist. Veranschaulichend stellt dies einen Zeitgeber 24 dar, der beispielsweise eine Synchronisation auf einen Minutenbeginn ermöglicht. Die Synchronisationsinformation wird von dem Zeitgeber 24 an beide Windenergieanlagen-Parks WP1 und WP2 übertragen.

Der Windpark 30 der Fig. 3 umfasst drei Windenergieanlagen 32 zur Veranschaulichung. Der Windpark 30 und somit die einzelnen Windenergieanlagen 32 wird bzw. werden durch einen Windparkregler 34, der als WP-Contr. bezeichnet werden kann, gesteuert. Hierbei erhält der Windpark bzw. jede einzelne Anlage die im Netz erfasste Spannung U und einen Sollwert der Blindleistung Q.

Hierzu erhält der Windparkregler 34 Daten vom SCADA-System 36, das von einem satellitengestützten System 38 unter anderem Zeitdaten 40 zur Synchronisation erhält. Der Windpark 30 kann somit auf ein absolutes Zeitsignal synchronisiert werden, entsprechend zu anderen Windparks gleiche absolute Messzeiten beinhalten und entsprechend über einen veranschaulicht gezeigten Transformator 42 ins Netz 10 einspeisen, das sich von dem Netz 10 der Fig. 2 unterscheiden kann. Hierüber kann auch eine entsprechende Netzstützung wie beispielsweise eine Blindleistungseinspeisung vorgenommen werden.

Fig. 3 veranschaulicht auch ein Internet 44, das mit dem SCADA-System 36 verbunden sein kann. Grundsätzlich ist es auch möglich, über das Internet eine Zeitsynchronisation zu schaffen, soweit die Genauigkeitsanforderungen jeweils ausreichend sind.

Fig. 4 veranschaulicht mögliche Konsequenzen unterschiedlicher Messzeiten bei einem schwankenden Spannungsverlauf. In Fig. 4 ist die Netzspannung U in Abhängigkeit der Zeit t abgetragen. Mit den Zahlen 1 bis 3 sollen jeweils Messzeitpunkte unterschiedlicher Windparks, nämlich eines ersten, zweiten oder dritten Windparks angezeigt werden. Dies könnte sich auch auf unabhängig voneinander einspeisende Windenergieanlagen beziehen. Fig. 4 macht dabei deutlich, dass zu unterschiedlichen Messzeitpunkten unterschiedliche Spannungshöhen vorliegen. Dabei kann sich auch ein Problem bei der Mittelwertbildung ergeben. So ist beispielsweise schraffiert ein Bereich von zwei einer zweiten Einspeiseanordnung zugeordneten Messpunkten dargestellt. Die Zeitdauer dieses schraffierten Bereichs kann beispielsweise 400 ms betragen. Auch diese Mittelwertbildung kann davon abhängen, über welchen Bereich gemessen wird. Durch die vorgeschlagene Synchronisation können auch Messungen mit Mittelwertbildung verbessert werden.

Beispielsweise kann eine Zeitsynchronisation im Minutenwechsel vorgenommen werden bzw. sich immer auf einen Minutenanfang beziehen. Ein Messintervall kann 400 ms betragen, um nur ein Beispiel zu nennen. Die Mittelwertbildung kann als arithmetisches Mittel verwendet werden. Ebenfalls kommen andere Verfahren in Betracht wie beispielsweise welche die auch filternde Eigenschaften aufweisen.

Als ein Gedanke liegt zugrunde, bei verschiedenen Messungen, die lokal voneinander getrennt vorgenommen werden, einen nahezu identischen Messwert zu erlangen. Betrachtet man die hardwaretechnischen Unterschiede / Messfehler nicht, ist das Messverfahren einzig ausschlaggebend für das Ergebnis. Es gibt drei zeitliche Abhängigkeiten: Messzeitpunkt, Messdauer, Abtastzeiten, zu denen vorgeschlagen wird, eine, mehrere oder alle zu synchronisieren.

Aus technischer Sicht spielt im Wesentlichen der Messzeitpunkt eine entscheidende Rolle der Messwerterfassung spielen. Durch relativ genaue Zeitgeber kann in kurzen Zeitperioden der Fehler in der Messzeitdauer und Abtastzeit in der Regel, was auch von konkreten Konstellationen abhängen kann, vernachlässigbar klein sein.

Wird der Messzeitpunkt in verschiedenen, lokal voneinander getrennten Messungen nicht synchronisiert, können erhebliche Abweichungen auftreten, was durch die vorliegende Erfindung erkannt wurde und vermieden werden soll.

Somit kann erfindungsgemäß das Problem, dass sich Parkregelungen verschiedener Parks gegenseitig beeinflussen, behoben werden, oder zumindest verringert werden. Für einzelne Anlagen in einem Park, nämlich einem Windpark, wurden bereits Lösungen vorgeschlagen, die eine entsprechende Kommunikation der Windenergieanlagen untereinander bzw. der Kommunikation mit einem Zentralsystem, wie einem SCADA, verwenden.

Hiermit wird eine gleichmäßige Einspeisung insbesondere Netzstützung unabhängig voneinander einspeisender Windparks ermöglicht. Es ist zu beachten, dass eine Netzstützung üblicherweise zunächst über eine Blindleistungsregelung erfolgt. Sollte dies nicht ausreichen, kann zusätzlich eine Wirkleistungsregelung verwendet werden.

Eine Maßnahme zur Verbesserung einer zwischen Windparks einheitlichen Messung ist, mehrere Abtastwerte zu verwenden oder gegebenenfalls höher abzutasten und/oder einen längeren Messzeitraum zu verwenden. Beispielsweise kann alle 50 ms oder alle 400 ms ein Mittelwert gebildet werden. Die genannte Lösung einer Synchronisation beispielsweise über ein GPS schafft ebenfalls eine Lösung. In beiden Fällen sollen möglichst selbe Voraussetzungen zwischen unterschiedlichen Einspeisen, bzw. Einspeiseanordnungen, insbesondere unterschiedlichen Windparks oder Windenergieanlagen geschaffen werden.

Hierbei kann ein GPS verwendet werden, das wiederum einen Stratum-Server beinhaltet, der eine entsprechend hohe Genauigkeitsklasse aufweist und dadurch eine Synchronisation vorteilhaft gestaltet. Insbesondere kommt ein sog. Hopf-Gerät zum Einsatz.

Zum Schaffen gleicher Voraussetzungen unterschiedlicher Einspeiseanordnungen insbesondere unterschiedlicher Windparks ist es vorteilhaft, wenn eine einheitliche Synchronisation, ein einheitlicher Messzeitraum und eine einheitliche Messmethode vorliegen.

Gegebenenfalls kann ein Messzeitraum beispielsweise von 400 ms auf 1,5 s erhöht werden, um dadurch eine Verbesserung zu erreichen.

Es wird somit insbesondere eine Zeitsynchronisation vorgeschlagen. Hierdurch können autarke, konkurrierende Regler synchronisiert werden, um die Stabilität dieser, insbesondere zweier solcher Regler sicherzustellen.

Werden z.B. an einem Netzeinspeiseverknüpfungspunkt, der auch Einspeiseknoten genannt werden kann, mehrere diskrete Spannungsregelungen betrieben, laufen diese möglicherweise nicht synchron. Im äußersten Fall kann es zu einem gegenseitigen Aufschwingen der Regler führen. Ein Grund für dieses Problem ist die Messwertmittelung der einzelnen Regler.

Durch Verwendung von Mittelwerten als Eingangsgröße, die unter den gleichen Randbedingungen, nämlich insbesondere Startzeit, Messdauer und Abtastrate, gebildet werden, kann allen Reglern ein nahezu identischer Messwert zur Verfügung gestellt werden. Eine Synchronisation erfolgt vorzugsweise einzig und allein über die Zeit, wodurch eine Synchronisation ohne direkte Kommunikation der betreffenden Anlagen möglich wird.

Somit wird eine Lösung vorgeschlagen, die das Ziel verfolgt, eine Synchronisation von zwei Windparks über ein Zeitsignal zu erreichen. Dies ist natürlich auch auf mehrere Windparks anwendbar. Die Mittelung der Spannung eines Netzanschlusspunktes könnte ansonsten zu unterschiedlichen Messzeitpunkten starten und auch unterschiedlich lang dauern, je nach verwendetem Messintervall.

Durch verschiedene Mittelung kann es zum Aufschwingen zwischen den beteiligten Windparks kommen, was zur Folge hätte, dass ein Windpark stärker als ein anderer belastet wird und es somit zu einer ungleichen Lastverteilung kommen kann. In diesem Zusammenhang wird auch auf die BDEW-Richtlinie, die Technische Richtlinie Erzeugungsanlagen am Mittelspannungsnetz, Richtlinie für Anschluss und Parallelbetrieb von Erzeugungsanlagen am Mittelspannungsnetz, Ausgabe Juni 2008, hingewiesen, die auf ihrer Seite 29/138 offen lässt, ob die Mittelung der Spannung über 1 s oder 1 min erfolgt. Es kann somit trotz Beachtung der Richtlinie zu unterschiedlichen Messzeiträumen bzw. Messintervallen kommen. Es wird vorgeschlagen, entsprechend gleiche Messintervalle zu verwenden.

Dieses Verfahren kann nicht nur Anwendung bei Windparks von verschiedenen Herstellern finden, sondern auch bei räumlich getrennten Messstellen.

## Patentansprüche

1. Verfahren zum Einspeisen elektrischer Leistung in ein elektrisches Netz (10) wobei
die Einspeisung mittels wenigstens einer Windenergieanlage (32) mit einer ersten Einspeiseanordnung an einem Einspeisepunkt in das elektrische Netz (10) erfolgt **dadurch gekennzeichnet, daß**
die Einspeisung abhängig von elektrischen Größen im Netz (10) erfolgt und Messwerte der elektrischen Größen bzw. Messwerte zum Bestimmen der elektrischen Größen zu Messzeitpunkten in vorbestimmten Zeitabständen erfasst werden und wobei die Messzeitpunkte auf ein externes, außerhalb der ersten Einspeiseanordnung verfügbares Zeitsignal synchronisiert werden.

2. Verfahren nach Anspruch 1, wobei die wenigstens eine Windenergieanlage (32) als Windpark (WP1, WP2) mit mehreren Windenergieanlagen (32) ausgebildet ist.

3. Verfahren nach Anspruch 1 oder 2, wobei die Messwerte als Mittelwerte über eine vorbestimmte Periodendauer aufgenommen, insbesondere gemittelt werden.

4. Verfahren nach einem der vorstehenden Ansprüche, **dadurch gekennzeichnet, dass** mehrere Einspeiseanordnungen betrieben werden, und jede Einspeiseanordnung zum Einspeisen an jeweils einem eigenen Einspeisepunkt betrieben wird und wobei jede dieser Einspeiseanordnungen zum Synchronisieren der jeweiligen Messzeitpunkte dasselbe Zeitsignal verwendet, so dass die Messzeitpunkte aller dieser Einspeiseanordnungen synchronisiert sind, so dass alle diese Einspeiseanordnungen jeweils zu gleichen Zeitpunkten die Messwerte erfassen.

5. Verfahren nach Anspruch 4, **dadurch gekennzeichnet, dass** die Einspeiseanordnungen jeweils eine gleiche Synchronisation, einen gleichen Messzeitraum und/oder ein gleiche Messmethode verwenden.

6. Verfahren nach einem der vorstehenden Ansprüche, **dadurch gekennzeichnet, dass** als externes Zeitsignal ein Zeitsignal eines satellitengestützten Positionierungssystems wie z.B. GPS verwendet wird.

7. Verfahren nach einem der vorstehenden Ansprüche, **dadurch gekennzeichnet, dass** wenigstens eine Einspeiseanordnung jeweils eine Uhr, insbesondere eine hochgenaue Uhr, aufweist, die Messzeitpunkte mittels der Uhr berechnet werden und die Uhr regelmäßig mittels des externen Zeitsignals synchronisiert wird, um eine Zeitgleichheit der Messzeitpunkte der Einspeiseanordnungen zu erreichen.

8. Verfahren nach einem der vorstehenden Ansprüche, **dadurch gekennzeichnet, dass** als elektrische Größen die Netzspannung erfasst wird.

9. Verfahren nach einem der vorstehenden Ansprüche, **dadurch gekennzeichnet, dass** abhängig von den erfassten elektrischen Größen, insbesondere abhängig der erfassten Netzspannung Maßnahmen zum Stützen des Netzes (10) vorgenommen werden, insbesondere, dass Wirkleistung und/oder Blindleistung abhängig von der erfassten Netzspannung eingespeist wird.

10. Windenergieanlage (32) mit einem aerodynamischen Rotor zum Erzeugen einer Drehbewegung aus Wind, mit einem elektrischen Generator zum Erzeugen elektrischer Leistung aus der Drehbewegung und mit einem Einspeisemittel, insbesondere einem Wechselrichter, zum Einspeisen der elektrischen Leistung oder eines Teils davon in ein elektrisches Netz (10), wobei der Windpark (WP1, WP2) mit einem Verfahren nach einem der Ansprüche 1 - 9 gesteuert wird.

11. Windpark (WP1, WP2) mit mehreren Windenergieanlagen (32), insbesondere nach Anspruch 10, wobei der Windpark (WP1, WP2) mit einem Verfahren nach einem der Ansprüche 1 - 9 gesteuert wird.

12. Windparkanordnung mit mehreren Windparks (WP1, WP2) nach Anspruch 11.

## Claims

1. A method of feeding electric power into an electric network (10) wherein
the feed is effected by means of at least one wind power installation (32) with a first feed-in arrangement at a feed-in point into the electric network (10), **characterized in that**
the feed is effected in dependence on electric parameters in the network (10) and measurement values of the electric parameters or measurement values for determining the electric parameters are detected at measurement times at predetermined time intervals and wherein the measurement times are synchronised to an external time signal available outside the first feed-in arrangement.

2. A method according to claim 1 wherein the at least one wind power installation (32) is in the form of a wind park (WP1, WP2) with a plurality of wind power installations (32) .

3. A method according to claim 1 or claim 2 wherein the measurement values are recorded as average values over a predetermined period duration, in particular averaged.

4. A method according to one of the preceding claims **characterised in that** a plurality of feed-in arrangements are operated and each feed-in arrangement is operated for feeding into the network at a respective dedicated feed-in point and wherein each of said feed-in arrangements uses the same time signal for synchronisation of the respective measurement times so that the measurement times of all said feed-in arrangements are synchronised so that all said feed-in arrangements detect the measurement values at respective identical moments in time.

5. A method according to claim 4 **characterised in that** the feed-in arrangements respectively use identical synchronisation, an identical measurement period and/or an identical measurement method.

6. A method according to one of the preceding claims **characterised in that** a time signal of a satellite-supported positioning system such as for example GPS is used as the external time signal.

7. A method according to one of the preceding claims **characterised in that** at least one feed-in arrangement has a respective clock, in particular a highly accurate clock, the measurement times are calculated by means of the clock and the clock is regularly synchronised by means of the external time signal to achieve time equality of the measurement times of the feed-in arrangements.

8. A method according to one of the preceding claims **characterised in that** the network voltage is detected as the electric parameters.

9. A method according to one of the preceding claims **characterised in that** measures for supporting the network (10) are implemented in dependence on the detected electric parameters, in particular in dependence on the detected network voltage, and in particular active power and/or reactive power are fed into the network in dependence on the detected network voltage.

10. A wind power installation (32) comprising an aerodynamic rotor for producing a rotary movement from wind, an electric generator for generating electric power from the rotary movement and a feed-in means, in particular an inverter, for feeding the electric power or a part thereof into an electric network (10), wherein the wind park (WP1, WP2) is controlled with a method according to one of claim 1 to 9.

11. A wind park (WP1, WP2) having a plurality of wind power installations (32), in particular according to claim 10, wherein the wind park (WP1, WP2) is controlled with a method according to one of claims 1 to 9.

12. A wind park arrangement having a plurality of wind parks (WP1, WP2) according to claim 11.

## Revendications

1. Procédé d'alimentation de puissance électrique dans un réseau électrique (10),
l'alimentation étant effectuée à l'aide d'au moins une éolienne (32) avec un premier agencement d'alimentation sur un point d'alimentation dans le réseau électrique (10), **caractérisé en ce que**
l'alimentation est effectuée en fonction de grandeurs électriques dans le réseau (10) et des valeurs de mesure des grandeurs électriques ou des valeurs de mesure pour la détermination des grandeurs électriques étant enregistrées à des moments de mesure à des intervalles de temps prédéterminés et les moments de mesure étant synchronisés sur un signal temporel externe, disponible en dehors du premier agencement d'alimentation.

2. Procédé selon la revendication 1, l'au moins une éolienne (32) étant réalisée sous la forme d'un parc éolien (WP1, WP2) avec plusieurs éoliennes (32).

3. Procédé selon la revendication 1 ou 2, les valeurs de mesure étant reçues, en particulier mises en moyenne, comme valeurs moyennes sur une durée périodique prédéterminée.

4. Procédé selon l'une quelconque des revendications précédentes, **caractérisé en ce que** plusieurs agencements d'alimentation sont en fonctionnement et chaque agencement d'alimentation est en fonctionnement pour l'alimentation sur respectivement un propre point d'alimentation et chacun de ces agencements d'alimentation utilisant pour la synchronisation des moments de mesure respectifs le même signal temporel afin que les moments de mesure de tous ces agencements d'alimentation soient synchronisés de sorte que tous ces agencements d'alimentation enregistrent respectivement les valeurs de mesure à des moments identiques.

5. Procédé selon la revendication 4, **caractérisé en ce que** les agencements d'alimentation utilisent respectivement une même synchronisation, une même période de mesure et/ou une même méthode de mesure.

6. Procédé selon l'une quelconque des revendications précédentes, **caractérisé en ce qu'**un signal temporel d'un système de positionnement à assistance satellite tel qu'un GPS est utilisé comme signal temporel externe.

7. Procédé selon l'une quelconque des revendications précédentes, **caractérisé en ce qu'**au moins un agencement d'alimentation présente respectivement une horloge, en particulier une horloge très précise, les moments de mesure sont calculés à l'aide de l'horloge et l'horloge est régulièrement synchronisée à l'aide du signal temporel externe afin d'atteindre une simultanéité des moments de mesure des agencements d'alimentation.

8. Procédé selon l'une quelconque des revendications précédentes, **caractérisé en ce que** la tension de réseau est enregistrée comme grandeurs électriques.

9. Procédé selon l'une quelconque des revendications précédentes, **caractérisé en ce qu'**en fonction des grandeurs électriques enregistrées, en particulier en fonction de la tension de réseau enregistrée, des mesures pour le soutien du réseau (10) sont entreprises, en particulier **en ce que** la puissance active et/ou la puissance réactive est alimentée en fonction de la tension de réseau enregistrée.

10. Éolienne (32) avec un rotor aérodynamique pour la génération d'un mouvement rotatif à partir du vent, avec un générateur électrique pour la génération de la puissance électrique à partir du mouvement rotatif et avec un moyen d'alimentation, en particulier un onduleur, pour l'alimentation de la puissance électrique ou d'une partie de celle-ci dans un réseau électrique (10), le parc éolien (WP1, WP2) étant commandé avec un procédé selon l'une quelconque des revendications 1 à 9.

11. Parc éolien (WP1, WP2) avec plusieurs installations éoliennes (32), en particulier selon la revendication 10, le parc éolien (WP1, WP2) étant commandé avec un procédé selon l'une quelconque des revendications 1 à 9.

12. Agencement de parc éolien avec plusieurs parcs éoliens (WP1, WP2) selon la revendication 11.
